# EUROPEAN PATENT APPLICATION

(11) **EP 3 373 219 A1**
(43) Date of publication of application: **12.09.2018**
(21) Application number: 18159689.1
(22) Date of filing: 02.03.2018
(51) Int. Cl.: G06Q 10/08

(54) **INVENTORY MANAGEMENT AND METHOD**

(30) Priority: 06.03.2017 JP 2017041917
(71) Applicant: Toshiba TEC Kabushiki Kaisha, Tokyo 141-8562 (JP)
(72) Inventor: SUZUKI, Jun, Shinagawa-ku,, Tokyo 141-8562 (JP); MURATA, Toshihide, Shinagawa-ku,, Tokyo 141-8562 (JP); WATANABE, Hirokazu, Shinagawa-ku,, Tokyo 141-8562 (JP); TERAUCHI, Toru, Shinagawa-ku,, Tokyo 141-8562 (JP)
(74) Representative: Takeuchi, Maya

(57) **Abstract**

According to one embodiment, a sales management device includes an acquisition unit, a generation unit, and an output unit. The acquisition unit acquires result data representing a past sales result for each item about the commodity being handled for sale. The generation unit generates candidate data representing candidates for which handling is to be terminated based on the result data acquired by the acquisition unit in an identifiable manner. The output unit outputs the candidate data generated by the generation unit.

## Description

### FIELD

Embodiments described herein relate generally to an inventory management system and method.

### BACKGROUND

At retail stores or the like, when new items start to be sold, some of the items may need to be terminated due to a space problem. In such a case, in the related art, items to be discontinued are determined based on the intuition of a person in charge. For this reason, in order to properly make such a decision, the skill of the person in charge is required. Under these circumstances, it is desirable to enhance the accuracy of items to be discontinued more easily and appropriately, without relying solely on the skill of the person in charge.

### SUMMARY OF INVENTION

To solve the above-cited problems, there is provided an inventory management system, comprising:
a server;
a plurality of point-of-sale (POS) terminals connected to the server over a network to exchange data with the server; and
a management terminal connected to the server over the network to exchange data with the server, wherein
the server is configured to execute a multi-factor inventory management system improvement software that processes a plurality of data items relating to each of multiple factors of inventory management, including data items processed by and received from the POS terminals, and transmit execution results of the software to the management terminal configured with a user interface for displaying the execution results.

Preferably the management terminal may be configured to sort the execution results and display the sorted execution results in the user interface.

Preferably the management terminal may be configured to sort the execution results by an ascending order of one of the multiple factors.

Preferably the management terminal may be configured to sort the execution results by a descending order of one of the multiple factors.

Preferably the management terminal may be configured to filter the execution results that are to be displayed in the user interface, according to a selection made on the user interface.

Preferably the selection may indicate to the management terminal that each of commodities having total sales to a single buyer in excess of a threshold sales amount is to be filtered.

Preferably the user interface may include a user interface element, which when selected, causes the user interface to be updated.

Preferably one of the factors may be a discount sales ratio, and the execution results include the discount sales ratio for each of commodities managed by the inventory management system.

Preferably one of the factors may be an effective sales amount, and the execution results include the effective sale amount for each of commodities managed by the inventory management system.

Preferably the effective sales amount for a commodity may take into account total sales of the commodity and total sales of at least one other commodity.

In another exemplary embodiment there is also provided an inventory management method carried out by the inventory management system according to the embodiments.

In yet another exemplary embodiment there is also provided an inventory management user interface executed in a management terminal connected to a server over a network to exchange data with the server, said user interface comprising:
a first user interface region displaying filter options for selection;
a second user interface region displaying a list of commodities, each of whose inventory is being managed, wherein the list is sorted according to one of multiple factors of inventory management; and
a button, which when selected, updates the list of commodities according to the selection made in the first user interface region, wherein
one of the multiple factors includes a discount sales ratio for each of the commodities, and
another one of the multiple factors include an effective sale amount for each of the commodities, the effective sales amount for a commodity taking into account total sales of the commodity and total sales of at least one other commodity.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a diagram showing a circuit configuration of the main part of a POS server according to an embodiment and a schematic configuration of a sales data management system to which the POS server is applied.
FIG. 2 is a diagram schematically showing a configuration example of detailed sales data.
FIGS. 3 and 4 depict a flowchart of information processing executed by a processor in FIG. 1 when carrying out a support function.
FIG. 5 is a diagram schematically showing a configuration of a data record for management data.
FIG. 6 is a diagram showing a basic form of a candidate screen.

### DETAILED DESCRIPTION

Embodiments provide an inventory management system and method by which an item to be discontinued can be determined more easily and appropriately.

A sales management device of the embodiment includes an acquisition unit, a generation unit, and an output unit. The acquisition unit acquires result data representing a past sales result for each item about the commodity being handled for sale. The generation unit generates candidate data representing candidates for which handling is to be terminated in an identifiable manner among the items based on the result data acquired by the acquisition unit. The output unit outputs the candidate data generated by the generation unit.

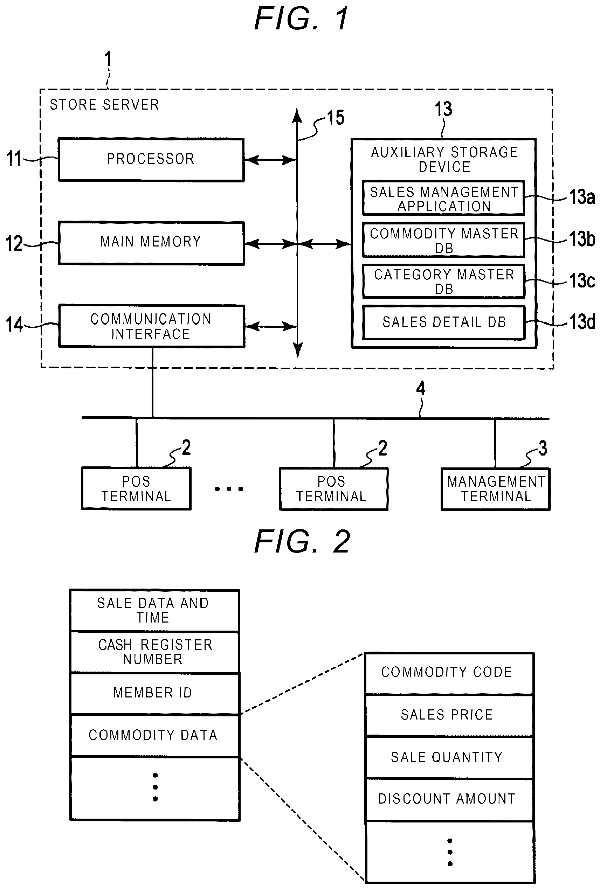

Hereinafter, an example of an embodiment will be described with reference to drawings. In the present embodiment, a point-of-sale (POS) server will be described as an example of a sales management device. FIG. 1 is a block diagram showing a circuit configuration of the main part of a POS server according to the present embodiment and a schematic configuration of a sales data management system to which the POS server is applied. This sales data management system includes a store server 1, a plurality of POS terminals 2, and a management terminal 3. The store server 1, the POS terminal 2, and the management terminal 3 communicate with each other via a communication network 4. The communication network 4 is, for example, a local area network (LAN). At least part of the store server 1, the plurality of POS terminals 2, and the management terminal 3 may be connected to the communication network 4 by wireless communication via a wireless access point which is not shown.

The store server 1 is installed in, for example, a back office of a store. The store server 1 manages sales data for management related to commodity sales in a store. The POS terminal 2 performs information processing related to registration, calculation, settlement, and the like related to the above commodity sale. Then, the POS terminal 2 sends sales data obtained as a result of such information processing to the store server 1. The management terminal 3 is an information terminal for a store clerk to check various pieces of information provided by the store server 1 for management of sales data. As an example of the management terminal 3, for example, a tablet terminal or the like may be used.

The store server 1 includes a processor 11, a main memory 12, an auxiliary storage device 13, a communication interface 14, and a bus 15 which is a transmission path. As the hardware of the store server 1, for example, a general-purpose information processing device, e.g., a computer, may be used. In the store server 1, the processor 11, the main memory 12 and the auxiliary storage device 13 are connected by the bus 15.

The processor 11 performs various functions of the store server 1 according to an operating system and application programs.

The main memory 12 includes a nonvolatile memory area and a volatile memory area. The main memory 12 stores the operating system and the application programs in a nonvolatile memory area. In addition, the main memory 12 may store data necessary for the processor 11 to execute various types of information processing in a nonvolatile or volatile memory area. The main memory 12 uses a volatile memory area as a work area where data is appropriately overwritten by the processor 11.

The auxiliary storage device 13 is, for example, electric erasable programmable read-only memory (EEPROM), hard disk drive (HDD), solid-state drive (SSD) or the like. The auxiliary storage device 13 stores data used by the processor 11 for various types of information processing and data generated by processing by the processor 11. The auxiliary storage device 13 sometimes stores the application programs mentioned above.

One of the application programs stored in the auxiliary storage device 13 is a sales management application 13a which is a program executed during information processing for sales management. In addition, a part of the storage area of the auxiliary storage device 13 is used as a commodity master database (commodity master DB) 13b, a category master database (category master DB) 13c, and a detailed sales database (sales detail DB) 13d.

The commodity master DB 13b is a collection of various pieces of information on respective commodities that are sold at a store. The information contained in the commodity master DB 13b is, for example, a commodity code and a commodity category code. The commodity code is a unique code for each item of a commodity. The commodity category code is a unique code for the commodity category to which the commodity belongs.

The category master DB 13c is a collection of various pieces of information on the commodity category. The information contained in the category master DB 13c is, for example, a category code and a commodity category name described above. The commodity category name is a name that determines the commodity category so that it is easy for humans to identify.

The sales detail DB 13d is a set of detailed sales data for each transaction related to commodity sales.

FIG. 2 is a diagram schematically showing a configuration example of detailed sales data. As shown in FIG. 2, the detailed sales data includes sale date and time, a cash register number, a member ID, and commodity data.

The sale date and time represents the date and time when a transaction is made. The cash register number represents a number for identifying the POS terminal 2 on which registration related on the transaction is performed. The member ID represents a code for identifying a customer. The commodity data contains information on the commodity to be sold. If there are more than one commodity to be sold, multiple commodity data for each item is included in the detailed sales data. The commodity data includes the commodity code, a sales price, sales quantity, a discount amount, and the like. The commodity code is a unique code for each item of the commodity. As the commodity code, for example, Japan article number (JAN) code is used. The sales price is the price applied for the transaction related to the commodity identified by the commodity code included in the same commodity data. The sales quantity is the quantity of the commodity sold in the transaction, which is identified by the commodity code included in the same commodity data. The discount amount is the difference between the regular sales price determined related to the commodity identified by the commodity code included in the same commodity data and the sales price included in the same commodity data.

The communication interface 14 is an interface for data communication via the communication network 4.

Next, the operation of the store server 1 configured as described above will be described. Here, the operation related to the support function for supporting the work of the store clerk for changing items that are to be sold at the store will be described. At the store, in order to start selling new items, some of the existing items may need to be discontinued. In order to determine an item to be discontinued, the store clerk accesses store server 1 by using the management terminal 3, activates the above support function, and requests display of a candidate screen representing candidate items to be discontinued. This request and processing in the management terminal 3 for displaying a candidate screen may be performed, for example, with a general-purpose web browser. However, the management terminal 3 may perform processing for displaying the above request and the candidate screen based on an application program different from a general-purpose web browser.

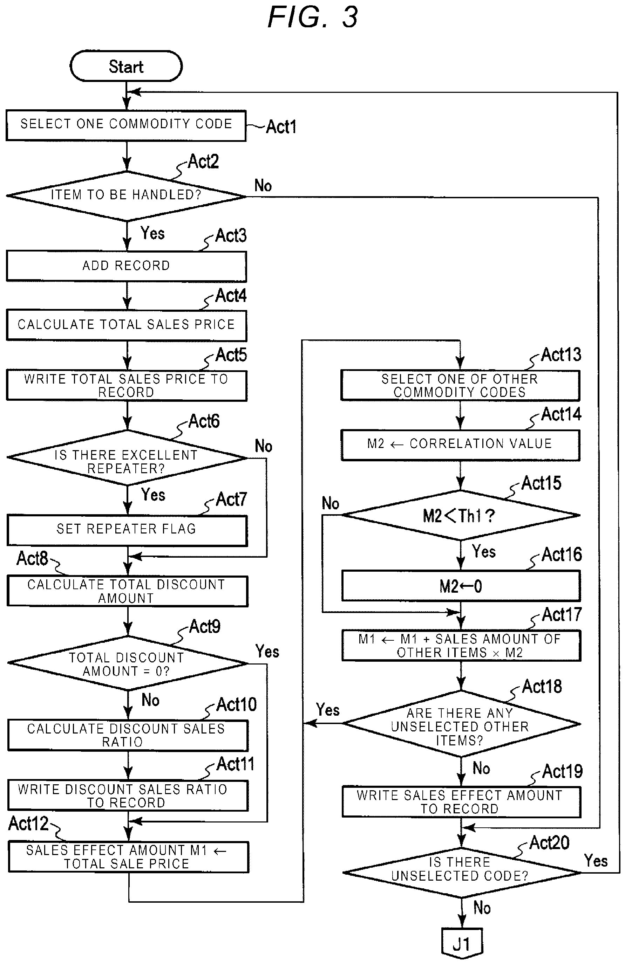

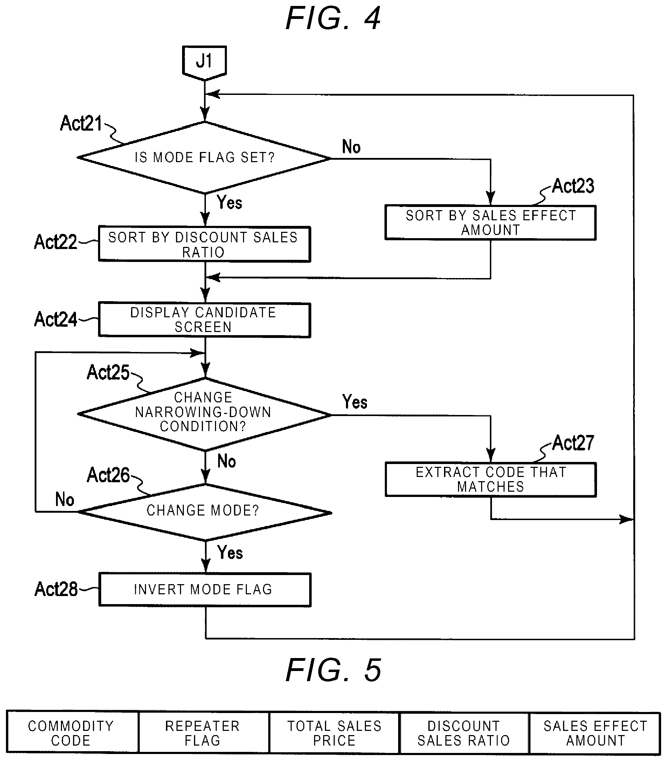

When the above request is transmitted to the store server 1 via the communication network 4, this request is received by the communication interface 14 and the request is notified to the processor 11. In response to this notification, the processor 11 executes information processing according to the sales management application 13a. FIGS. 3 and 4 are flowcharts of information processing executed by the processor 11 to realize the support function. The contents of information processing described below are mere examples, and various processing capable of obtaining similar results may be appropriately used. For example, the order of some operations may be changed. In addition, some operations may be omitted, or additional operations may be added and executed.

As Act 1 in FIG. 3, the processor 11 selects one of the commodity codes included in the commodity master DB 13b. The item identified by the commodity code selected here is hereinafter referred to as an item of interest.

As Act 2, the processor 11 checks whether or not the item of interest is an item being sold at the store. The information as to whether or not the item is being sold is included in the commodity master DB 13b, for example. Then, if the item of interest is an item being sold, the processor 11 makes a determination of Yes in Act 2 and proceeds to Act 3.

As Act 3, the processor 11 adds a new data record constituting the management data to the main memory 12 or the auxiliary storage device 13. The management data is data for managing items which are candidates to be discontinued. The management data includes a set of data records corresponding to respective items being sold.

FIG. 5 is a diagram schematically showing a configuration of a data record constituting the management data. As shown in FIG. 5, the management data includes a repeater flag, total sales price, a discount sales ratio, and a sales effect amount in association with the commodity code. In Act 3, the processor 11 resets the repeater flag of the commodity code selected in Act 1 and adds a data record in which the total sales price, the discount sales ratio, and the sales effect amount are all "0".

In Act 4, the processor 11 calculates the total sales price of the item of interest. Specifically, the processor 11 extracts all items that match a predetermined condition among the commodity data including the commodity code selected in Act 1 from the sales detail DB 13d. Then, the processor 11 calculates the total sales price as the sum of the product of the sales price and the sales quantity for each extracted commodity data. The above condition may be freely determined by the creator of the sales management application 13a or a user of the store server 1. For example, the detailed sales data may include sale date and time within a predetermined period. In a first example, an item with a regular price of 100 Yen is sold 100 pieces at a sales price of 100 Yen and 100 pieces at a sales price of 80 Yen in the predetermined period. In this first example, the processor 11 calculates the total sales price as 18,000 Yen by calculation of 100 × 100 + 80 × 100. In a second example, an item with a regular price of 100 Yen is sold 150 pieces at a sales price of 100 Yen and 50 pieces at a sales price of 80 Yen in the predetermined period. In this second example, the processor 11 calculates the total sales price as 19,000 Yen by calculation of 100 × 150 + 80 × 50.

In Act 5, the processor 11 writes the total sales price calculated as described above into the data record added in Act 3.

In Act 6, the processor 11 checks whether or not there is an "excellent repeater" related to the item of interest. An "excellent repeater" is a customer who meets a certain condition among customers who repeatedly purchase the commodity of the item of interest. The condition may be freely determined by the creator of the sales management application 13a or the user of the store server 1 and can be different. For example, to qualify as an excellent repeater, the total purchase amount of the item of interest by any one customer must be equal to or greater than a predetermined amount. Then, if there is an excellent repeater, the processor 11 makes a determination of Yes and proceeds to Act 7.

In Act 7, the processor 11 sets the repeater flag in the data record added in Act 3. The processor 11 then proceeds to Act 8. If there is no excellent repeater, the processor 11 makes a determination of No in Act 6, skips Act 7, that is, keeps the repeater flag in the reset state, and proceeds to Act 8.

In Act 8, the processor 11 calculates the total discount amount. Specifically, the processor 11 calculates the total discount amount as the sum of the discount amounts respectively included in the commodity data extracted in Act 4. In the case of the above first example, the discount amount when the sales price is 100 Yen is 0 Yen, and the discount amount when the sales price is 80 Yen is 20 Yen. Therefore, the processor 11 calculates the total discount amount as 2,000 Yen by calculation of 0 × 100 + 20 × 100. In addition, in the case of the above second example, the processor 11 calculates the discount amount total as 1,000 by calculation of 0 × 150 + 20 × 50.

In Act 9, the processor 11 checks whether or not the total discount amount is "0". Then, if the discount amount total is not "0", the processor 11 makes a determination of No and proceeds to Act 10.

In Act 10, the processor 11 calculates the discount sales ratio. Specifically, the processor 11 calculates the discount sales ratio as a percentage of a value obtained by dividing the total discount amount by the total sales price. In the case of the first example described above, the processor 11 calculates the discount sales ratio as 11.11 by calculation of (2,000 / 18,000) × 100. In addition, in the case of the above second example, the processor 11 calculates the discount sales ratio as 5.26% by calculation of (1,000 / 19,000) × 100.

In Act 11, the processor 11 writes the discount sales ratio in the data record added in Act 3. The processor 11 then proceeds to Act 12. When the total discount amount is 0 and the result of Act 9 is Yes, the processor 11 skips Acts 10 and 11, that is, keeps the discount sales ratio "0", and proceeds to Act 12. In Act 12, the processor 11 sets the total sales price calculated in Act 4 to be the initial value for a variable M1 for calculating the sales effect amount. The sales effect amount represents the degree of contribution of the item of interest to the sales at the store.

In Act 13, the processor 11 selects another commodity code different from already identified the item of interest in the commodity master DB 13b. Items identified by the commodity code selected here are hereinafter referred to as other items.

In Act 14, the processor 11 analyzes a correlation value to what degree the item of interest has an influence on the sales of the other items. Then the processor 11 substitutes the correlation value into a variable M2. As the correlation value, for example, a value may be obtained by an analysis method such as a certainty degree in association analysis, a correlation coefficient, or the like may be used. Here, the correlation value increases as the certainty degree increases.

In Act 15, the processor 11 checks whether or not the variable M2 is less than a predetermined threshold value Th1. Then, if the variable M2 is less than the threshold value Th1, the processor 11 makes a determination of Yes and proceeds to Act 16.

In Act 16, the processor 11 replaces the variable M2 with "0". In other words, the processor 11 judges that there is no correlation when the influence of the item of interest on the sales of the other items is negative or even if the influence is positive but relatively small. The threshold value Th1 may be flexibly chosen depending on the situation by the creator of the sales management application 13a or the user of the store server 1.

When the processor 11 finishes Act 16, the processor 11 proceeds to Act 17. In addition, if the variable M2 is equal to or greater than the threshold value Th1, the result of Act 15 is determined as No skipping Act 16 and proceeds to Act 17. That is, when the item of interest has a great influence on the sales of the other items, the processor 11 adopts the correlation value obtained in Act 14. In Act 17, the processor 11 updates the variable M1 to a new value obtained by adding a value obtained by multiplying the sales amount of other items by the variable M2. The sales amount of the other items may be calculated by performing the same processing as the calculation of the total sales price in Act 4, for such other items.

In Act 18, the processor 11 checks whether or not there are any unselected other items in Act 13. If there are any unselected other items, the processor 11 makes a determination of Yes, returns to Act 13, and repeats Acts 13 to Act 18 in the same manner as described above. In Act 13, the processor 11 selects a commodity code which has not yet been selected while repeating the loop of Acts 13 to Act 18. In this way, the processor 11 repeats Acts 14 to Act 17 for respective commodity codes other than the commodity codes selected in Act 1 among the commodity codes included in the commodity master DB 13b. As a result, the processor 11 integrates a value obtained by multiplying the sales amount of respective other items by the correlation value into the variable M1. Then, when the execution of Acts 14 to Act 17 is finished for all the other items, the processor 11 make a determination of No in Act 18 and proceeds to Act 19.

In Act 19, the processor 11 writes the value of the variable M1 as the sales effect amount in the data record added in Act 3. The processor 11 then proceeds to Act 20. If an item identified in Act 1 is not an item being sold, the result of Act 2 is determined as No, the processor 11 skips Acts 3 to 19 and proceeds to Act 20.

In Act 20, the processor 11 checks whether or not there are any unselected commodity codes in Act 1. Then, if there is an unselected commodity code, the processor 11 makes a determination of Yes, returns to Act 1, and repeats Acts 1 to Act 19 in the same manner as described above. However, in Act 1, the processor 11 selects a commodity code which has not yet been selected while repeating the loop of Acts 1 to Act 20. In this way, the processor 11 creates a data record having the configuration shown in FIG. 5 for respective items identified by the commodity codes included in the commodity master DB 13b. When the processor 11 finishes preparing the data record corresponding to all the items being sold, the processor 11 makes a determination of No in Act 20 and proceeds to Act 21 in FIG. 4.

The management data, which is a collection of data records as described above, is an example of result data representing the past sales result for each item being sold. The processor 11 acquires the management data as result data by the above processing. In this way, the processor 11 executes the information processing based on the sales management application 13a so that the computer functions as an acquisition unit.

In Act 21, the processor 11 checks whether or not a mode flag is in a set state. The mode flag is, for example, one bit of data stored in the nonvolatile memory area of the main memory 12 or the auxiliary storage device 13. When the mode flag is in the set state, the mode flag indicates that candidate items to be discontinued are determined based on the discount sales ratio. In contrast, when the mode flag is in a reset state, the mode flag indicates that candidate items to be discontinued are determined based on the sales effect amount. If the mode flag is in the set state and is determined as "Yes", the processor 11 proceeds to Act 22, and if the mode flag is in the reset state and is determined as "No", the processor 11 proceeds to Act 23.

In Act 22, the processor 11 sorts the data records created as described above by descending order of the discount sales ratio. The processor 11 then proceeds to Act 24. As Act 23, the processor 11 sorts the data records created as described above by descending order of the sales effect amount. The processor 11 then proceeds to Act 24.

In Act 24, the processor 11 causes the management terminal 3 to display the candidate screen. Specifically, the processor 11 generates screen data indicating a candidate screen as described later. The screen data is sent to the management terminal 3 from the communication interface 14 to the communication network 4. The management terminal 3 includes a display device and, when receiving the above screen data, displays the candidate screen on the display device according to the screen data.

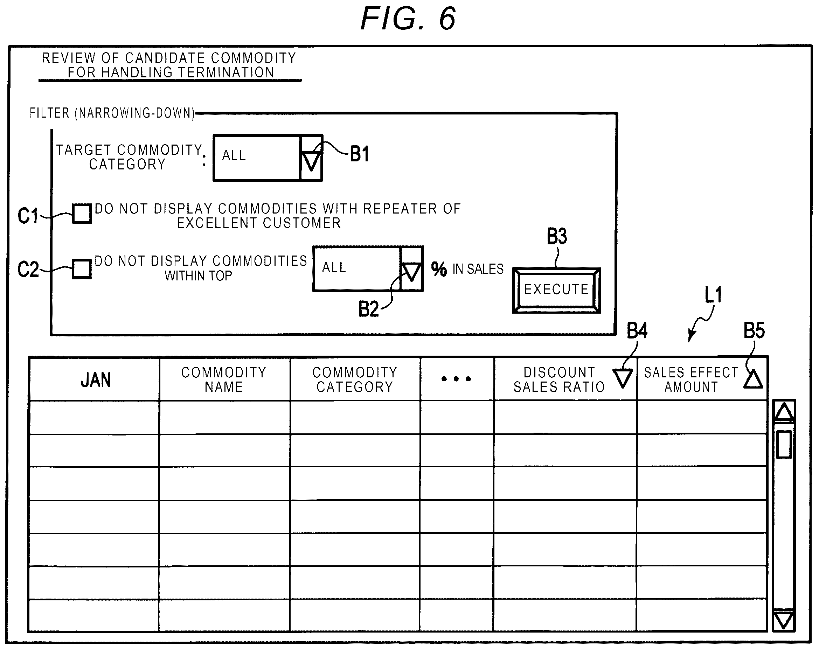

FIG. 6 is a diagram showing a basic form of the candidate screen. The candidate screen includes a candidate item list L1, buttons B1, B2, B3, B4, and B5, and check-boxes C1 and C2.

The candidate item list L1 represents information based on the respective data records created in the order sorted in Act 22 or Act 23. In FIG. 6, illustration of specific contents of the candidate item list L1 is omitted. Which information is represented in the candidate item list L1 may be freely determined by the creator of the sales management application 13a or the user of the store server 1 or the like.

In the example of FIG. 6, the candidate item list L1 includes JAN, commodity name, commodity category, discount sales ratio, and sales effect amount as headings. In each column of the same row, information on one data record is represented. Specifically, in this example, the JAN code is used as the commodity code, and in the column where the heading is "JAN", the commodity code included in the data record is represented. In the column where the heading is "commodity name", the commodity name included in the commodity master DB 13b in association with the commodity code indicated on the same row is represented. In the column where the heading is "commodity category", the commodity category name included in the category master DB 13c in association with the commodity code shown on the same row is represented. In the column where the heading is "discount sales ratio", the value contained as the discount sales ratio together with the commodity code shown in the same row in the data record is represented. In the column where the heading is "sales effect amount", the value contained in the data record as the sales effect amount together with the commodity code shown in the same row is represented.

The candidate item list L1 is an example of data representing candidates which are supposed to be discontinued among the items being sold, in an identifiable manner. In this way, when the processor 11 executes the information processing based on the sales management application 13a, the computer functions as a generation unit configured to generate the candidate item list L1 as candidate data. In addition, the computer functions as an output unit configured to output the candidate item list L1 by transmitting the screen data representing the candidate item list L1.

The buttons B1 and B2 are buttons for setting a narrowing-down condition. When the button B1 is pressed, the web browser displaying the candidate screen displays a pull-down list of the commodity category names. When a commodity category name is selected from the pull-down list, the web browser displays the commodity category name on the left side of the button B1 and sets the selected commodity category in the candidate item list L1. FIG. 6 shows a state in which all commodity categories are set to be displayed. When the button B2 is pressed, the web browser displays a pull-down list by percentage. Then, when the percentage is selected from the pull-down list, the web browser displays the percentage on the left side of the button B2 and substitutes the percentage into a variable N. As a result, the web browser generates a condition that "commodities within top N% in sales are not candidates to be discontinued".

The check-boxes C1 and C2 are used to set the validity of the condition. The check-box C1 is associated with a condition that the commodities in the data record of which repeater flag is in the set state are not shown as candidates to be discontinued. The check-box C2 is associated with the condition that the commodities with top N% sales are not candidates to be discontinued". Every time the check-boxes C1 and C2 are selected, the web browser turns on and off the display of check marks to the check-boxes C1 and C2 and also sets the condition associated with the check-box displaying the check mark to be valid.

The button B3 is a button for instructing the application to update the candidate item list L1 according to the new narrowing-down conditions. The button B4 is a button for instructing to sort in descending order of the discount sales ratio. The button B5 is a button for instructing to sort in descending order of the sales effect amount.

When the button B3 is pressed, the web browser notifies the store server 1 of the narrowing-down condition. In addition, when the button B4 or B5 is pressed, the web browser notifies the store server 1 of the particular sorting instruction.

Now, in the store server 1, the processor 11 causes to display the candidate screen as Act 24 in FIG. 4 and then proceeds to Act 25. In Act 25, the processor 11 checks whether or not to change the narrowing-down condition. If no change is made to the narrowing-down condition, the processor 11 makes a determination of No and proceeds to Act 26. As Act 26, the processor 11 checks whether or not to change a sort mode. Then, if there is no need to change the mode, the processor 11 makes a determination of "No" and returns to Act 25. In this way, the processor 11 waits for the instruction of changing the narrowing-down condition or mode. When a change in the narrowing-down condition is notified from the web browser of the management terminal 3 as described above, the processor 11 makes a determination of Yes in Act 25 and proceeds to Act 27.

In Act 27, the processor 11 extracts a data record including the commodity code matching the changed narrowing-down condition. Then, the processor 11 repeats the processing of Act 21 only for the newly extracted data record in the same manner as described above.

On one hand, if it is notified that the button B5 is pressed when the mode flag is in the set state (sorted by discount sales ratio) or if it is notified that the button B4 is pressed when the mode flag is in the reset state (sorted by sales effect amount), the processor 11 make a determination of Yes in Act 26 and proceeds to Act 28.

In Act 28, the processor 11 inverts the mode flag. Then, the processor 11 repeats the processing of Act 21 and thereafter in the same manner as described above. The processor 11 terminates the information processing at any stage of the information processing described above if a predetermined event such as a termination instruction occurs, for example.

As described above, according to the store server 1, as the discount sales ratio for each item is larger, or as the sales effect amount is smaller, the commodity is likely to come up to the top of a candidate screen as candidates to be discontinued. Large discount sales ratio is more likely to mean the sales are only secured by discounting the value thereof and have a low degree of contribution to profit. In addition, small sales effect amount is likely to mean a low degree of contribution to store sales after taking into consideration the sales result of the item itself and the influence on the sales result of other items. Therefore, items coming up to the top of the candidate screen are more likely to be less affected when the sales thereof is discontinued. The store clerk may be able to select possible items to be discontinued based on the candidate screen. In this way, it is possible to increase the possibility of determining items to be sold more easily and appropriately, without relying on the skill of the store clerk.

In addition, according to the store server 1, when the store clerk presses the button B3 with a check mark in the check-box C1, the processor 11 excludes items with excellent repeaters from the items candidates to be discontinued. Here, even if the discount sales ratio for each item is large, or the item whose sales effect amount is small, there is a case that the purchase of the item is a motivation for a specific customer to visit the store. Then, if such a customer is an excellent customer, there is a case that the handling of the item should not be terminated. Therefore, in such a case, by using the function of excluding items with excellent repeaters from the candidates as described above, the store clerk may be able to determine items to be discontinued more appropriately.

In this embodiment, the following various modifications are possible. The calculation of the discount sales ratio and the sales effect amount may be performed by another device. For example, in a head office server provided in a headquarters managing a plurality of stores, the discount sales ratio and the sales effect amount may be calculated in consideration of sales results in a plurality of stores. In this case, the processor 11 acquires and uses the discount sales ratio and the sales effect amount calculated by another device via the communication network 4 or the like.

The candidate data is not limited to the data representing the candidate screen, and may be data in another form such as data for generating a candidate screen in a management terminal, for example.

Items whose discount sales ratio is equal to or greater than a threshold value or items whose sales effect amount is less than a threshold value may be candidate items for which handling is to be terminated.

The output of the candidate data may be performed in various ways such as display on a display device provided in the store server 1, printing by a printer provided in the store server 1, or writing in a portable storage medium.

The candidate items to be discontinued may be determined as those whose total sales amount is smaller than a threshold value or as those whose total sales amount at a predetermined other shop is smaller. Also, it may be assumed that items matching conditions such as "total sales price is less", "total sales price at another predetermined store is larger ", "discount sales have been performed within a recent predetermined period", "there is no repeater", and the like are candidate items to be discontinued.

The narrowing-down condition of candidates for items to be discontinued may be freely changed. For example, if items that have just started to be sold in a recent time period may be excluded from candidate items to be discontinued.

The hardware of the store server 1 and the application program executed on the hardware may be separately delivered by different business suppliers. When the same business suppliers delivers both the hardware of the store server 1 and the application program, the application program is generally stored in the main memory 12 or the auxiliary storage device 13 which is hardware of the store server 1. However, even in such a case, the application program does not have to be stored in the main memory 12 or the auxiliary storage device 13 which is hardware of the store server 1. For example, the application may be transferred from a removable recording medium such as a magnetic disk, a magneto-optical disk, an optical disk, a semiconductor memory, and the like, which are not the hardware of the store server 1, or may be download from a network resource.

A part or all of the functions realized by the processor 11 by information processing may be realized by hardware which executes information processing not based on a program such as a logic circuit or the like. In addition, the above-described respective functions may also be realized by combining software control with hardware.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. An inventory management system, comprising:
a server;
a plurality of point-of-sale (POS) terminals connected to the server over a network to exchange data with the server; and
a management terminal connected to the server over the network to exchange data with the server, wherein
the server is configured to execute a multi-factor inventory management system improvement software that processes a plurality of data items relating to each of multiple factors of inventory management, including data items processed by and received from the POS terminals, and transmit execution results of the software to the management terminal configured with a user interface for displaying the execution results.

2. The system according to claim 1, wherein the management terminal is configured to sort the execution results and display the sorted execution results in the user interface.

3. The system according to claim 2, wherein the management terminal is configured to sort the execution results by an ascending order of one of the multiple factors.

4. The system according to claim 2, wherein the management terminal is configured to sort the execution results by a descending order of one of the multiple factors.

5. The system according to any one of claims 1 to 4, wherein the management terminal is configured to filter the execution results that are to be displayed in the user interface, according to a selection made on the user interface.

6. The system according to claim 5, wherein the selection indicates to the management terminal that each of commodities having total sales to a single buyer in excess of a threshold sales amount is to be filtered.

7. The system according to any one of claims 1 to 6, wherein the user interface includes a user interface element, which when selected, causes the user interface to be updated.

8. The system according to any one of claims 1 to 7, wherein one of the factors is a discount sales ratio, and the execution results include the discount sales ratio for each of commodities managed by the inventory management system.

9. The system according to any one of claims 1 to 7, wherein one of the factors is an effective sales amount, and the execution results include the effective sale amount for each of commodities managed by the inventory management system.

10. The system according to claim 9, wherein the effective sales amount for a commodity takes into account total sales of the commodity and total sales of at least one other commodity.

11. An inventory management method carried out by the inventory management system according to any one of claims 1 to 10.

12. An inventory management user interface executed in a management terminal connected to a server over a network to exchange data with the server, said user interface comprising:
a first user interface region displaying filter options for selection;
a second user interface region displaying a list of commodities, each of whose inventory is being managed, wherein the list is sorted according to one of multiple factors of inventory management; and
a button, which when selected, updates the list of commodities according to the selection made in the first user interface region, wherein
one of the multiple factors includes a discount sales ratio for each of the commodities, and
another one of the multiple factors include an effective sale amount for each of the commodities, the effective sales amount for a commodity taking into account total sales of the commodity and total sales of at least one other commodity.
